# EUROPEAN PATENT SPECIFICATION

(11) **EP 1 022 918 B1**
(45) Date of publication and mention of the grant of the patent: **07.09.2005**
(21) Application number: 00100484.5
(22) Date of filing: 10.01.2000
(51) Int. Cl.: H04Q 7/34

(54) **Operating parameters in a cellular communications system**
Betriebsparameter in einem zellularen Kommunikationsnetzwerk
Paramètres d'exploitation dans un système cellulaire de communication

(30) Priority: 20.01.1999 GB 9901113
(43) Date of publication of application: 26.07.2000
(73) Proprietor: MOTOROLA LTD, Hampshire RG22 4PD (GB)
(72) Inventor: Stephens, Paul, Twyford, Berkshire, RG10 0AE (GB); Costello, Michael, Cork (IE)
(74) Representative: Jepsen, René Pihl

(56) References cited:
- WO-A-97/21317
- DE-A- 19 813 754
- HIRSCH L: "EINHEITLICHES VERFAHREN ZUR PLAUSIBILITÄTSKONTROLLE DER KONFIGURATIONSÄNDERUNGEN VON RADIOPARAMETERN IN EINEM MOBILFUNKNETZ" SIEMENS TECHNIK REPORT, DE, SIEMENS AG, ERLANGEN, vol. 2, no. 2, January 1999 (1999-01), pages 52-56, XP000828537 ISSN: 1436-7777

## Description

### Field of the Invention

The present invention relates to the alteration of operating parameters within a cellular communications system. The present invention is applicable to, but not limited to, cellular radio communication systems such as the Global System for Mobile Communications (GSM), and also the Universal Mobile Telecommunication System (UMTS) currently under standardisation.

### Background of the Invention

One type of communications system is a cellular communications system. In a cellular communications system, the area over which service is provided is divided into a number of smaller areas called cells. Typically each cell is served from a base transceiver station (BTS) which has a corresponding antenna or antennas for transmission to and reception from a user station, normally a mobile station. Presently established cellular radio communications systems include GSM systems (Global System for Mobile Communications).

In addition to the above mentioned BTSs, cellular communications systems include other components, typically mobile services switching centres (MSC), base station controllers (BSC), and operations and maintenance centres (OMC). Additionally, such components are themselves made of sub-units which are themselves components, and the latter are also themselves made of sub-units which are themselves components, and so on. For example a BTS device can include a number of different transmission unit devices according to the number of channels broadcast by that BTS.

Components of a cellular communications system use operating parameters that can be re-set by the network operator. In the case of a BTS in a GSM system, for example, many hundreds of such operating parameters are involved. Some examples that are included in the GSM standard are as follows:
bCCHAllocationNumber
   indicates the frequency band used by the BCCH channel
bsIdentityCode
   contains the Base Transceiver Station Identity (BSIC), which is used for identifying a BTS
gsmdcsIndicator
   The gsmdcsIndicator attribute indicates the type of system (GSM or DCS 1800) supported by the cell. This indication may be used to interpret or check the values of other attributes.
cellGlobalIdentity
   contains the Cell Identification (CI) and the Location Area Id of the cell
cellReselectHysteresis
   indicates the value of the receiver RF power level hysteresis required for cell reselection
ny1
   maximum number of repetitions of the PHYSICAL INFORMATION message on the radio interface
mSTxPwrMax
   indicates the maximum power level a mobile station (MS) may use in the serving cell
periodCCCHLoadIndication
   indicates the frequency on which the CCCH load indication is sent to the BSC
plmnPermitted
   contains the value of the Network Colour Code (NCC) for accessing MS
radioLinkTimeout
   indicates the maximum value of the radio link counter needed to detect a radio link failure
rxLevAccessMin
   indicates the minimum received level at the MS required for access to the system
maxNumberRetransmission
   max number of retransmissions a MS may perform on the RACH. Possible values are 1, 2, 4 and 7
mSTxPwrMaxCCH
   indicates the maximum transmit power level a MS may use when accessing the system on a CCH of the cell
noOfBlocksForAccessGrant
   the number of TDMA frames reserved for the Access Grant channel during a period of 51 TDMA frames (a multiframe)
noOfMultiframesBetweenPaging
   the number of multiframes (51 frames) between two transmissions of the same paging message to mobiles of the same paging group
allowIMSIAttachDetach
   controls whether the IMSI attach / detach procedure is used in the cell
callReestablishmentAllowed
   indicates whether call re-establishment is allowed in the cell
emergencyCallRestricted
   determines whether emergency calls are allowed to all MSs or restricted to MSs belonging to access classes in the range 11 to 15.
notAllowedAccessClasses
   a list of MS Access Classes, which are not allowed to access the cell

One example of an operating parameter that is beneficial to include, but not essential, under the GSM system is a one which sets a limit of the maximum power output of the cell by indicating the amount of attenuation to be applied.

Many types of characteristic of a cellular communications system, covering different physical variables, are accommodated by the inclusion of different operating parameters of a cellular communications system. The particular parameters will vary from system type to system type, and also different ones may be used according to individual requirements by different commercial users of fundamentally similarly technical systems. Furthermore, different parameters will be associated with different types of system components.

An example of a configuration system for a cellular communication system is disclosed in "Einheitliches Verfahren zur Plausibitätskontrolle der Konfigurationsänderungen von Radioparametem in einem Mobilfunknetz" by Hirsch in Siemens Technik Reporrt, DE, Siemens AG, Erlangen, vol. 2, no.2, January 1999 (1999-01), pages 52-56, ISSN: 1436-7777. In the disclosed system a plausibility check is performed for configuration changes in a mobile radio network regardless of where these changes take place.

In known systems it is a cumbersome task to organise and alter appropriate operating parameter values in each different component, for example on a cell to cell basis. A significant disadvantage arises when a system operator wishes to alter parameters in a number of different components. Also, a further disadvantage, is that without any harmonised means of changing parameters in different components, inappropriate random or localised changes occur, for example due to historical reasons, operator error or even simply lack of awareness of a higher system level requirement that can be disrupted by changes to an individual component. One case where this is particularly likely is where the components under consideration are BTSs corresponding to respective individual cells.

### Summary of the Invention

The present invention addresses some or all of the above disadvantages related to the task of altering operating parameter values in components of a cellular communications system.

According to one aspect of the present invention, there is provided a cellular communications system, as claimed in claim 1.

According to another aspect of the present invention, there is provided a method of altering operating parameters in components of a cellular communications system, as claimed in claim 3.

Further aspects of the invention are as claimed in the dependent claims.

The present invention advantageously provides a relatively harmonised and efficient means for altering the operating parameters. One advantage is an increased degree of consistency of operating parameter values between for example cells of the same type. Also, as a system operator develops improved insight into appropriate operating parameter settings, these can be changed straightforwardly.

In preferred versions of the present invention, in which all of the respective operating parameters of a database except for any modified operating parameters of that database are altered to the same values to which those of the corresponding database template are altered, the above advantages can be obtained, in many cases without diminution, whilst at the same time accommodating localised variations that are desirable or required.

Additional specific advantages are apparent from the following description and figures.

### Brief Description of the Drawings

Fig. 1 is an illustration of a cellular communications system which is in accordance with the present invention.
Fig. 2 is a schematic illustration of the relationship between operating parameters, databases, and database templates in accordance with an embodiment of the present invention.

### Description of an Embodiment of the Invention

The examples hereinafter described relate to a cellular communications system which is a GSM system, although it will be appreciated that the invention is not limited to such a system and can equally be used in other cellular communications systems, including other time division multiple access (TDMA) systems, code division multiple access (CDMA) systems, or combined TDMA-CDMA systems, and also the UMTS system currently under standardisation.

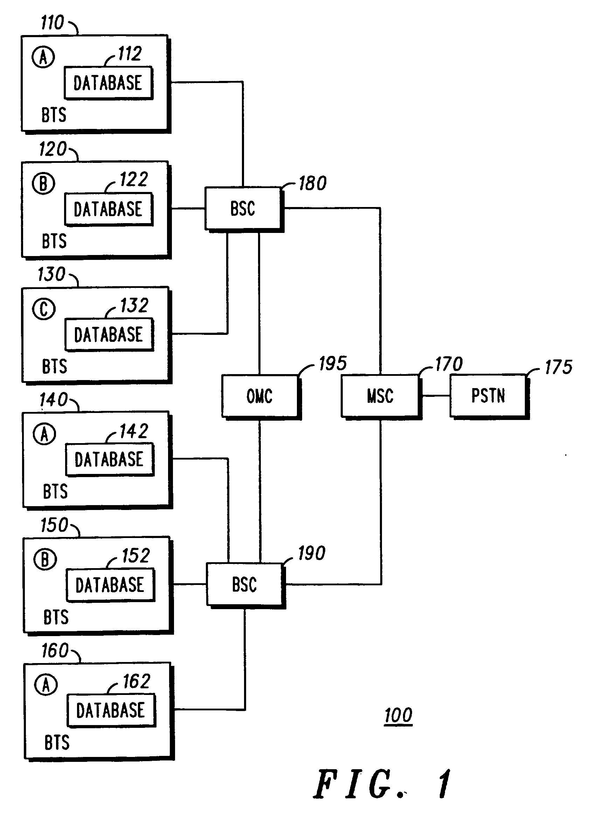

FIG. 1 illustrates part of a cellular communications system 100 in which three base transceiver stations (BTS) 110, 120 and 130 are each coupled to mobile services switching centre (MSC) 170 through one base station controller (BSC) 180, and three further BTSs 140, 150 and 160 are each coupled to the same MSC 170 through a second BSC 190. MSC 170 is further coupled to a public switched telephone network (PSTN) 175. An operations and maintenance centre (OMC) 195 is also coupled to both BSC 180 and BSC 190.

BTSs 110, 120 and 130 are each controlled by BSC 180. BTSs 140, 150 and 160 are each controlled by BSC 190. Each BTS provides a coverage area, known as a cell, of the cellular communications system. In the present example, the operating parameters under consideration are those pertaining to the operation of the respective BTSs.

In the present example the operating parameters are held and functionally accessed in use at the respective BTSs 110, 120, 130 140, 150 and 160 in the form of a database at each BTS, the databases being shown as items 112, 122, 132, 142, 152 and 162 respectively in Fig. 1. Each such database is implemented in the form of programmable hardware located within the respective BTS. One such hardware is the BTS Central Processor card, Motorola GPROC (trade mark). However, the database can be implemented in any of a number of alternative forms, including, for example, in the form of software or by a combination of software and hardware. In the present example the database is actually located in the BTS, but in other examples the database of the component may be physically remote from the component, including being distributed throughout a number of locations within the cellular communications system. Furthermore the term database is to be understood as encompassing a collection of separate constituent databases in the case where different types of constituent databases are used for a given component to hold different types of operating parameters.

For the sake of simplicity, the present example will be explained with consideration of only four operating parameters. However, it is noted that usually a far larger number of operating parameters will be involved in a full system. It is emphasised that the present invention is applicable to any operating parameters that need to be set at a respective BTS or component, of which merely a small number were given as examples in the Background to the Invention section above. The four parameters for the present example are from GSM 12.20 BTS Class, where they are explained more fully, and are as follows:
Operating parameter 1: "MaxTxPwrMax" (this sets the maximum power level a mobile station may use in the cell provided by the BTS).
Operating parameter 2: "RxLevAccessMin" (this sets the minimum received level at the mobile station required for access to the system in the cell provided by the BTS).
Operating parameter 3: "radioLinkTimeout" (this sets the maximum value of the radio link counter needed to detect a radio link failure).
Operating parameter 4: "ny1" (this sets the maximum number of repetitions of the PHYSICAL INFORMATION message on the radio interface).

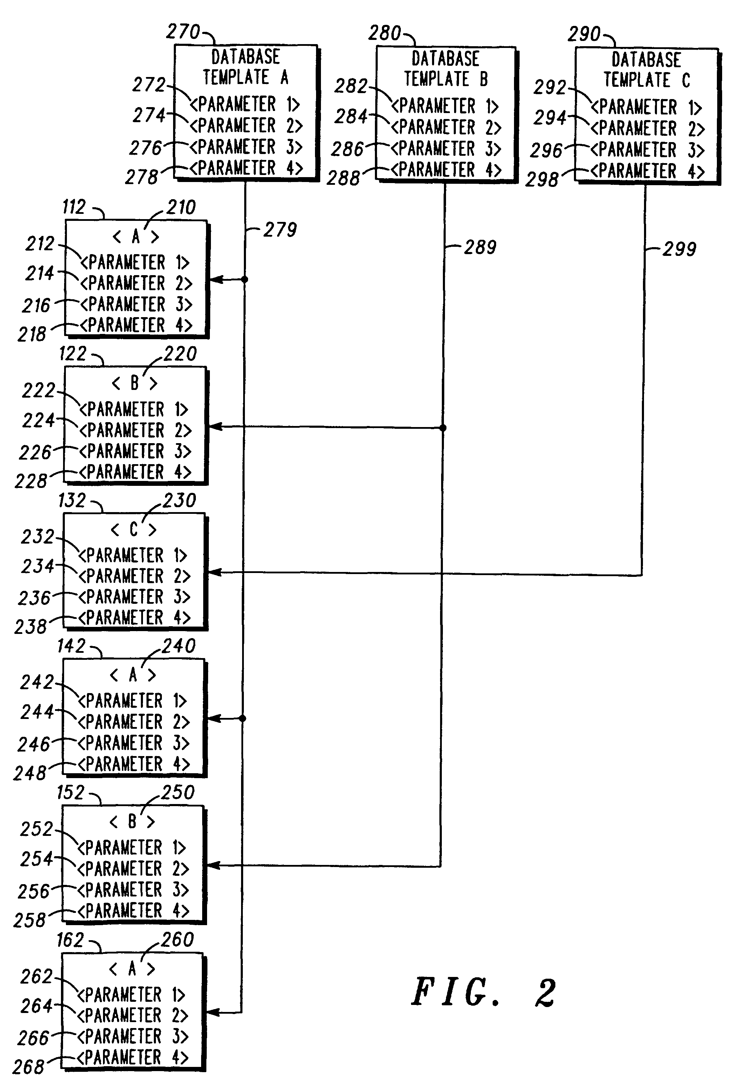

The operating parameters are schematically shown located in the respective databases in Fig. 2. In the case of database 112, of BTS 110, the operating parameters 1-4 are shown as items 212, 214, 216 and 218 respectively. In the case of database 122, of BTS 120, the operating parameters 1-4 are shown as items 222, 224, 226 and 228 respectively. In the case of database 132, of BTS 130, the operating parameters 1-4 are shown as items 232, 234, 236 and 238 respectively. In the case of database 142, of BTS 140, the operating parameters 1-4 are shown as items 242, 244, 246 and 248 respectively. In the case of database 152, of BTS 150, the operating parameters 1-4 are shown as items 252, 254, 256 and 258 respectively. In the case of database 162, of BTS 160, the operating parameters 1-4 are shown as items 262, 264, 266 and 268 respectively.

The database templates of the present example will now be explained. A database template comprises a set of operating parameter values that the system operator wishes to be applied to specific components of the system. For example, the system operator may have a first database template, for BTSs that form cells that he will treat as standard urban cells. He may have a second database template for BTSs that form cells that he will treat as particularly busy urban cells. He may have a third database template for BTSs that form cells that he will treat as rural cells. The choice of the operating parameters for each respective database template is made according to the different requirements of each type of cell, e.g. the busy urban cells may require a higher value of the operating parameter RxLevAccessMin compared to a standard urban cell which in turn requires a higher value than a rural cell. Such choices and decisions of operating parameter values within each database template, as well as choice of categories served by such templates, and the total number thereof, will in practise be chosen by the system operator according to the requirements of the particular system under consideration. Furthermore, the number of such different templates, and the values of the operating parameters therein can be updated during use of the system as the operator acquires more insight into suitable values or as circumstances change. For example, other ways of allocating types include according to frequency band or, in a multi-layer system with layers such as microcells and picocells, according to layer level.

In the present example the database templates are implemented in the form of programmable hardware contained in apparatus located at OMC 195. One such hardware is a UNIX system server such as Sun (trade mark), supporting a database such as Informix (trade mark), Oracle (trade mark) and the like. The object model contained in the database reflects the BTS hardware hierarchy discussed earlier. However, as is mentioned above for the component databases, the database templates can be implemented in any of a number of alternative forms, including, for example, in the form of software or by a combination of software and hardware. Although in the present example the database templates are located at OMC 195, nevertheless in other examples the database templates may be located in other parts of the system, including being distributed throughout a number of locations within the cellular communications system. Furthermore the term database template is to be understood as encompassing a collection of separate constituent database templates compliant with the case where different types of constituent databases are used for a given component to hold different types of operating parameters.

The databases are tagged such that each component has correspondence to a database template and arranged such that one or more operating parameters of the respective databases of those components corresponding to a particular database template are altered responsive to one or more said operating parameters of said particular database template being altered.

In the present example, the operator decides which BTS is to be classed as which type. Let us label the three types of classification of the present example as follows:
Type A - busy urban (with database template A)
Type B - standard urban (with database template B)
Type C - rural (with database template C)

The three database templates of the present example, namely database template A, database template B, and database template C are schematically shown as items 270, 280 and 290 respectively in Fig. 2. Each database template comprises a set of operating parameter values that the system operator wishes to be applied to those BTSs of the system that he assigns as the relevant type, i.e. type A, B or C. The operating parameters are schematically shown located in the respective database templates in Fig. 2. In the case of database template 270, i.e. for the type A cells, the operating parameters 1-4 are shown as items 272, 274, 276 and 278 respectively. In the case of database template 280, i.e. for the type B cells, the operating parameters 1-4 are shown as items 282, 284, 286 and 288 respectively. In the case of database template 290, i.e. for the type C cells, the operating parameters 1-4 are shown as items 292, 294, 296 and 298 respectively.

Let us now assume that the operator classifies the six BTSs of Fig. 1 as follows (and as shown in Figs. 1 and 2):
BTS 100-type A
BTS 120-type B
BTS 130-type C
BTS 140-type A
BTS 150-type B
BTS 160 - type A

The OMC holds a list of all templates, identifying each by a descriptive name. When each new cell is added to the system, the user is provided with a list of templates and prompted to select one for association with the new cell. This association is stored as an identification type of parameter within the cell's database. The databases are tagged with the indication of which type, thus in this example whether they are type A, B or C. Thus, in the present example, the databases each contain this further type of parameter, namely a tag, flag or identification type of parameter imposing on that BTS which type of database template they correspond to, i.e. whether they correspond to type A, B or C. These tagging parameters are shown schematically in Fig. 2 as follows. The parameter is schematically shown as item 210 in database 112 of BTS 110, where it is set to type A, thus providing database 112 with correspondence to database template A. The parameter is schematically shown as item 220 in database 122 of BTS 120, where it is set to type B, thus providing database 122 with correspondence to database template B. The parameter is schematically shown as item 230 in database 132 of BTS 130, where it is set to type C, thus providing database 132 with correspondence to database template C. The parameter is schematically shown as item 240 in database 142 of BTS 140, where it is set to type A, thus providing database 142 with correspondence to database template A. The parameter is schematically shown as item 250 in database 152 of BTS 150, where it is set to type B, thus providing database 152 with correspondence to database template B. The parameter is schematically shown as item 260 in database 162 of BTS 160, where it is set to type A, thus providing database 162 with correspondence to database template A.

In the present example, all the operating parameters within all type A databases are set the same as the values in database template A. When the system operator wishes to alter one or more parameters in all BTSs tagged as type A, he alters the relevant operating parameter or parameters in database template A and all corresponding operating parameters in all the corresponding BTSs tagged as type A consequently alter accordingly. The same applies to type B and type C BTSs. This control and propagation of operating parameter changes is indicated schematically by flow lines in Fig. 2. Flow line 279 schematically shows the altered operating parameters laid down in database template A being propagated to those databases tagged as type A. Flow line 289 schematically shows the altered operating parameters laid down in database template B being propagated to those databases tagged as type B. Flow line 299 schematically shows the altered operating parameters laid down in database template C being propagated to those databases tagged as type C. This propagation of altered operating parameters is implemented as follows. The database management process, for example in the form of software resident on the OMC, scans the list of identification parameters selecting those for which the template type matches the template database that was altered. For each of the BTSs correspondingly found, the process copies the values of the changed operating parameters to the corresponding operating parameters in the relevant database.

In a further preferred example, hereinafter referred to as the second example accommodation is made for individual parameters that need to be made different to the template setting in particular BTSs for localised reasons. For example, consider that BTS 162, although generally classified as type A, nevertheless has a localised difference in that due to being near an airport, its value of the parameter MaxTxPwrMax must be lower than the normal type A value. Then in the second example, this operating parameter is modified at BTS 162, so that it is no longer the same as the database template value, nor is it any longer tied to the database template value, such that when the system operator alters the default settings of the operating parameters in database template A, and consequently the operating parameters within those BTSs tagged as type A are altered, nevertheless the modified operating parameter at BTS 162, in this example MaxTxPwrMax, is not altered from its special modified value.

Furthermore, when an overall combination of operating parameters in a BTS including some modified operating parameters in the sense described above is found to give good performance, the overall combination can be used to determine an additional choice of database template or alternatively replace a less favoured existing database template.

It will be apparent that the exact means of implementing any of the above processes will vary according to the exact system requirements and the existing technology within the applicable system. In a GSM system as described above, the various steps of selecting, storing, implementing and propagating operating parameter values and tagging parameters can be performed using software, hardware or a combination of software and hardware, and also including or by direct operator influence.

More generally, it is noted that any cellular communications system which includes the use of operating parameters that need to be set at distributed components will derive benefit from the present invention. Furthermore, the invention is applicable to communications systems wherein the infrastructure and components is other than as particularly described in the examples above.

## Claims

1. A cellular communications system wherein components of said system (110, 120) have respective databases (112,122) of operating parameters (212, 214, 222, 224), and **characterized in that** said databases (112, 122) are tagged such that each component (110,120) has correspondence to a database template (270, 280) out of a plurality of database templates associated with different cell types and said databases are arranged such that one or more operating parameters (212, 214, 222, 224) of the respective databases (112, 122) of those components (110, 120) corresponding to a particular database template (270, 280) are altered responsive to one or more said operating parameters (272, 274, 282, 284) of said particular database template (270, 280) being altered.

2. A cellular communications system according to claim 1, wherein respective operating parameters (212, 214, 222, 224) of each database are at the same values as those of the corresponding database template (270, 280) except for any modified operating parameters, and all of the respective operating parameters (212, 214, 222, 224) of a database except for any modified operating parameters of that database are altered to the same values to which those of the corresponding database template (270, 280) are altered.

3. A method of altering operating parameters in components (110, 120) of a cellular communications system, wherein said components (110, 120) have respective databases (112, 122) containing said operating parameters (212, 214, 222, 224); the method **characterized by** comprising the steps of:
tagging said databases (112, 122) such that each component has correspondence to a particular database template (270, 280) out of a plurality of database templates associated with different cell types, and
altering one or more said operating parameters (272, 274, 282, 284) of said particular database template (270, 280) such that responsively thereto one or more operating parameters (212, 214, 222, 224) of the respective databases of those components corresponding to said particular database template (270, 280) are altered.

4. A method according to claim 3, wherein respective operating parameters of each database (112, 122) are at the same values as those of the corresponding database template (270, 280) except for any modified operating parameters, and all of the respective operating parameters of a database except for any modified operating parameters of that database are altered to the same values to which those of the corresponding database template (270, 280) are altered.

## Patentansprüche

1. Zellulares Kommunikationssystem, wobei Komponenten des Systems (110, 120) entsprechende Datenbanken (112, 122) von Betriebsparametern (212, 214, 222, 224) aufweisen, und **dadurch gekennzeichnet, dass** die Datenbanken (112, 122) so markiert sind, dass jede Komponente (110, 120) zu einer Datenbankschablone (270, 280) aus einer Mehrzahl von Datenbankschablonen, die zu unterschiedlichen Zelltypen gehören, korrespondiert, und dass die Datenbanken so eingerichtet sind, dass ein oder mehrere Betriebsparameter (212, 214, 222, 224) der entsprechenden Datenbanken (112, 122) derjenigen Komponenten (110, 112) die zu einer speziellen Datenbankschablone (270, 280) korrespondieren, in Abhängigkeit davon, dass ein oder mehrere der Betriebsparameter (272, 274, 282, 284) der speziellen Datenbankschablone (270, 280) geändert werden, geändert werden.

2. Zellulares Kommunikationssystem gemäß Anspruch 1, wobei entsprechende Betriebsparameter (212, 214, 222, 224) jeder Datenbank dieselben Werte aufweisen, wie diejenigen der korrespondierenden Datenbankschablone (270, 280), ausgenommen jegliche modifizierten Betriebsparameter, und wobei alle der entsprechenden Betriebsparameter (212, 214, 222, 224) einer Datenbank, ausgenommen jegliche modifizierten Betriebsparameter dieser Datenbank, auf dieselben Werte geändert werden, auf welche diejenigen der korrespondierenden Datenbankschablone (270, 280) geändert werden.

3. Verfahren zum Verändern von Betriebsparametern in Komponenten (110, 120) eines zellularen Kommunikationssystems, wobei die Komponenten (110, 120) entsprechende Datenbanken (112, 122) aufweisen, die die Betriebsparameter (212, 214, 222, 224) enthalten, wobei das Verfahren **dadurch gekennzeichnet ist, dass** es die folgenden Schritte umfasst:
Markieren der Datenbanken (112, 122), so dass jede Komponente zu einer speziellen Datenbankschablone (270, 280) aus einer Mehrzahl von Datenbankschablonen, die zu unterschiedlichen Zelltypen gehören, korrespondiert, und
Verändern eines oder mehrerer Betriebsparameter (272, 274, 282, 284) der speziellen Datenbankschablone (270, 280), so dass in Abhängigkeit davon ein oder mehrere Betriebsparameter (212, 214, 222, 224) der entsprechenden Datenbanken derjenigen Komponenten, die zu der speziellen Datenbankschablone (270, 280) korrespondieren, verändert werden.

4. Verfahren gemäß Anspruch 3, wobei entsprechende Betriebsparameter jeder Datenbank (112, 122) dieselben Werte aufweisen, wie diejenigen der korrespondieren Datenbankschablone (270, 280) ausgenommen jegliche modifizierten Betriebsparameter, und wobei alle der entsprechenden Betriebsparameter einer Datenbank, ausgenommen jegliche modifizierten Betriebsparameter dieser Datenbank, auf dieselben Werte geändert werden, auf welche diejenigen der korrespondierenden Datenbankschablone (270, 280) geändert werden.

## Revendications

1. Système de communication cellulaire dans lequel des composants dudit système (110, 120) ont des bases de données respectives (112, 122) de paramètres de fonctionnement (212, 214, 222, 224), et **caractérisé en ce que** lesdites bases de données (112, 122) sont étiquetées de telle sorte que chaque composant (110, 120) possède une correspondance avec un gabarit de base de données (270, 280) parmi une pluralité de gabarits de base de données associés à différents types de cellules et lesdites bases de données étant agencées de telle sorte qu'un ou plusieurs paramètres de fonctionnement (212, 214, 222, 224) des bases de données respectives (112, 122) de ces composants (110, 120) correspondant à un gabarit particulier de base de données (270, 280) sont modifiés en réponse à un ou plusieurs desdits paramètres de fonctionnement (272, 274, 280, 284) dudit gabarit particulier de base de données (270, 280) qui est modifié.

2. Système de communication cellulaire selon la revendication 1, dans lequel des paramètres de fonctionnement respectifs (212, 214, 2222, 224) de chaque base de données possèdent les mêmes valeurs que celles du gabarit correspondant de base de données (270, 280) hormis en ce qui concerne tous les paramètres de fonctionnement modifiés, et tous les paramètres respectifs de fonctionnement (212, 214, 222, 224) d'une base de données hormis en ce qui concerne tous les paramètres de fonctionnement modifiés de cette base de données, sont modifiés pour prendre les mêmes valeurs, que celle prises, par modification, par les paramètres du gabarit correspondant de base de données (270, 280).

3. Procédé pour modifier des paramètres de fonctionnement dans des composants (110, 120) d'un système de communication cellulaire, dans lequel lesdits composants (110, 120) possèdent des bases de données respectives (112, 122) contenant lesdits paramètres de fonctionnement (212, 213, 222, 224); le procédé étant **caractérisé en ce qu'**il comprend les étapes consistant à:
étiqueter lesdites bases de données (112, 122) de telle sorte que chaque composant a une correspondance avec un gabarit particulier de base de données (270, 280) parmi une pluralité de gabarits de base de données associés à différents types de cellules; et
modifier un ou plusieurs desdits paramètres de fonctionnement (272, 274, 282, 284) dudit gabarit particulier de base de données (270, 280) de telle sorte qu'en réponse à cela un ou plusieurs paramètres de fonctionnement (212, 214, 222, 224) des bases de données respectives des composants correspondant audit gabarit particulier de base de données (270, 280) sont modifiés.

4. Procédé selon la revendication 3, dans lequel les paramètres de fonctionnement respectifs de chaque base de données (112, 122) sont aux mêmes valeurs que celles du gabarit de données de base correspondant (270, 280), sauf pour tous paramètres de fonctionnement modifiés, et tous les paramètres de fonctionnement respectifs d'une base de données, sauf pour tous paramètres de fonctionnement modifiés de cette base de données, sont modifiés aux mêmes valeurs auxquelles celles du gabarit de données de base correspondant (270, 280) sont modifiées.
